# EUROPEAN PATENT SPECIFICATION

(11) **EP 1 895 429 B1**
(45) Date of publication and mention of the grant of the patent: **27.07.2011**
(21) Application number: 07106461.2
(22) Date of filing: 18.04.2007
(51) Int. Cl.: G06F 13/40, G06F 13/36

(54) **Transmission control device and transmission control method**
Vorrichtung und Verfahren zur Übertragungssteuerung
Dispositif de contrôle de transmission et procédé de contrôle de transmission

(30) Priority: 18.08.2006 JP 2006223490
(43) Date of publication of application: 05.03.2008
(73) Proprietor: Fujitsu Ltd., Kawasaki-shi, Kanagawa 211-8588 (JP)
(72) Inventor: Kinoshita, Takayuki c/o Fujitsu Limited, Kawasaki-shi Kanagawa 211-8588 (JP); Ichimiya, Junji c/o Fujitsu Limited, Kawasaki-shi Kanagawa 211-8588 (JP); Itozawa, Shintarou c/o Fujitsu Limited, Kawasaki-shi Kanagawa 211-8588 (JP)
(74) Representative: Hitching, Peter Matthew

(56) References cited:
- EP-A- 0 752 667
- WO-A-99/32981
- US-A1- 2006 101 234
- US-B1- 6 629 177

## Description

### BACKGROUND OF THE INVENTION

### 1. Field of the Invention

The present invention relates to a technology for transmission control.

### 2. Description of the Related Art

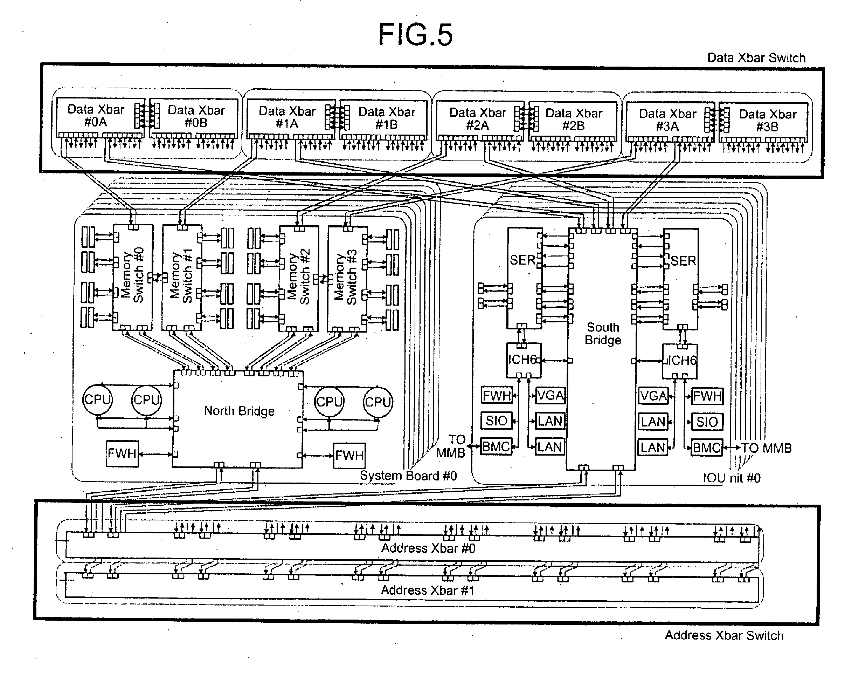

Technologies have been proposed to improve the performance, such as data processing speed, of computer processors (for example, personal computers, workstations, and servers) used in various systems. An example of such technologies is disclosed in Japanese Patent Application Laid-Open No. H10-254843. Among them is the one that employs a multiprocessor configuration including a central processing unit (CPU), a system board with a main storage unit, etc. mounted thereon, and an input/output (I/O) unit that controls connections to external devices such as peripheral component interconnect (PCI) cards as shown in Fig. 5.

In the multiprocessor configuration, an address crossbar switch arbitrates address requests (for example, address requests related to data writing or data reading) issued by CPU or I/O devices to increase data transfer rate between system boards, between I/O units, or between a system board and an I/O unit.

However, the conventional technologies described above have a problem of causing livelock, which leads to system shutdown. Specifically, upon receiving a plurality of address requests from CPU or I/O devices, the address crossbar switch arbitrates the address requests and transfers the address requests in a round robin fashion without performing any specific control. For example, if there is an access conflict for the same address or if there is a resource shortage, a broadcasted address request is not processed, and is returned from the receiver with a retry request. The address crossbar switch rebroadcasts the retried address request. When a series of the operations is performed at a timing, the address request is not processed until resource is released. This causes livelock in which the process waits in busy mode for resource release. If the livelock state continues, a system is eventually shut down.

The livelock can be avoided by managing the retry level of address requests; however, there is a problem that complicated circuitry is required.

EP-A-0752667 discloses a transmission control device and method of operation thereof as detailed in the preamble to the independent claims herein.

### SUMMARY OF THE INVENTION

It is an object of the present invention to at least partially solve the problems in the conventional technology.

According to an aspect of the present invention, a transmission control device that arbitrates requests from devices in a computer system and devices externally connected to the computer system, and merges responses to the requests from the devices, the transmission control device comprising: a storage unit that is arranged to store therein a request; and a transmission-suspension control unit that is arranged to control transmission of stored request to be suspended for a predetermined time period characterized in that the transmission-suspension control unit is arranged to control the broadcast of said requests from devices in a computer system and devices externally connected to the computer system to all the devices, and the merged responses, the storage unit is arranged to store the request temporarily, and the transmission-suspension control unit further controls transmission of the stored request to be suspended at variable or random timing.

According to another aspect of the present invention, a transmission control method in which requests from devices in a computer system and devices externally connected to the computer system are arbitrated, and responses to the requests from the devices are merged, the transmission control method comprising: storing a request; and controlling transmission of stored request to be suspended for a predetermined time period, characterized in that the control method includes broadcasting, to all the devices, the requests from devices in a computer system and devices externally connected to the computer system, and broadcasting, to all the devices, the responses merged, the storing includes storing the request temporarily, and the controlling includes controlling transmission of the stored request to be suspended at variable or random timing.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Figs. 1 and 2 are schematics for explaining an outline and features of an address crossbar switch according to an embodiment of the present invention;
Fig. 3 is a block diagram of the address crossbar switch;
Fig. 4 is a flowchart of the operation of the address crossbar switch; and
Fig. 5 is a diagram of a configuration of a conventional computer processor.

### DETAILED DESCRIPTION OF THE PREFERRED EMBODIMENTS

Exemplary embodiments of the present invention are explained below in detail with reference to accompanying drawings. In the following embodiment, an address crossbar switch functions as a request transmitting device.

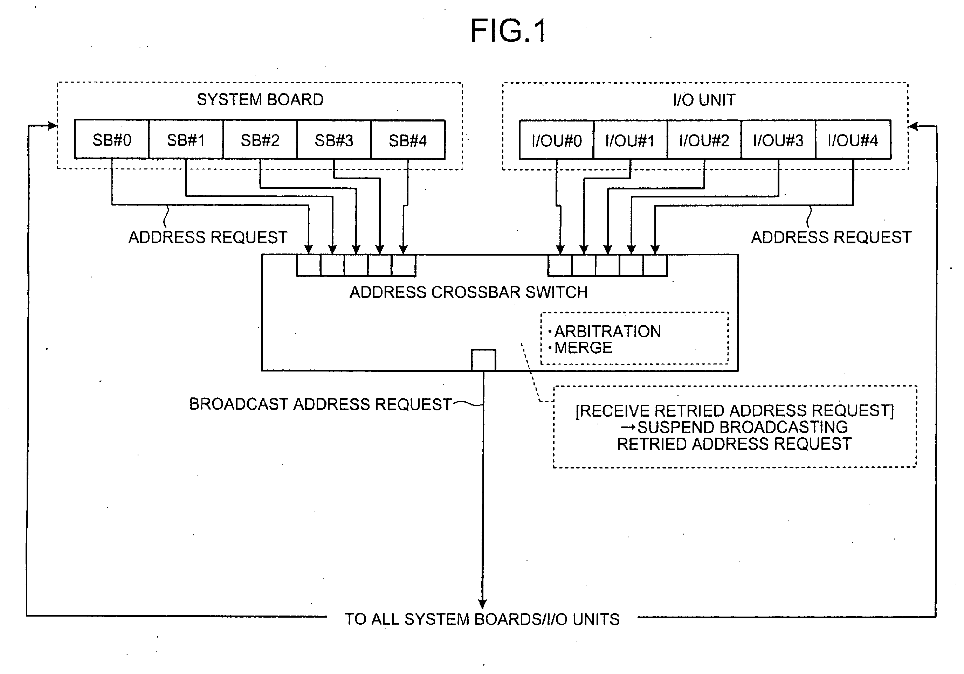

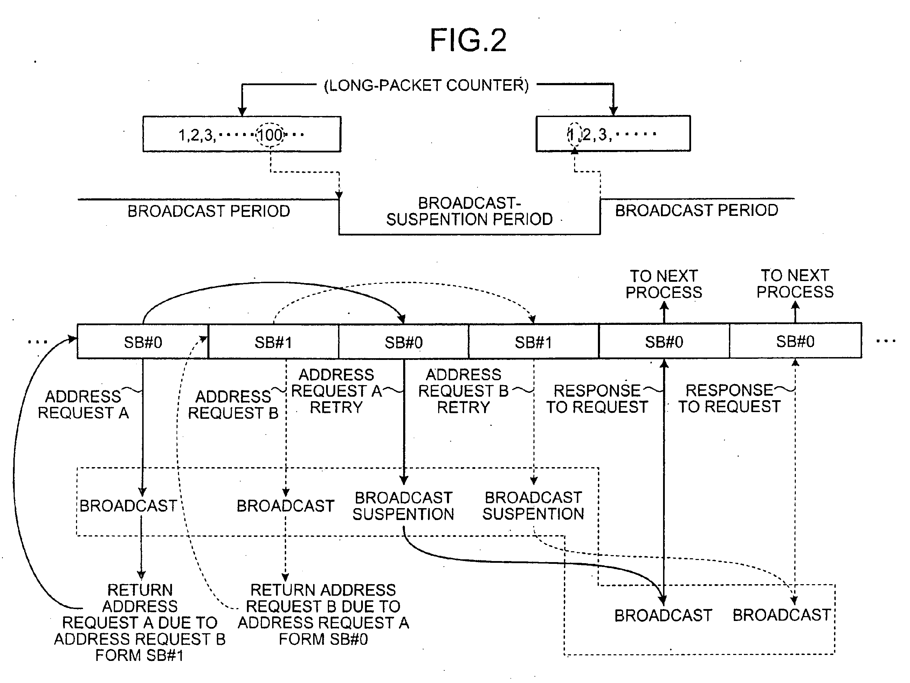

Figs. 1 and 2 are schematics for explaining an outline and salient features of an address crossbar switch according to an embodiment of the present invention. As shown in Fig. 1, the address crossbar switch arbitrates address requests received from various devices including CPU in a computer system such as a computer processor, or from various external devices such as a PCI card connected to the computer system, thereby transmitting (broadcasting) the address requests to all the devices. Besides, the address crossbar switch merges responses to the address requests received from the devices, and broadcasts the responses to all the devices. Thus, the address crossbar switch can avoid livelock and prevent system shutdown.

Upon receiving, for example, retried address requests from system boards (SB#0 to SB#4) with a main control unit such as CPU and a main storage unit such as a memory mounted thereon, and I/O units (I/OU#0 to I/OU#4) that control connection between the computer system and external devices, the address crossbar switch suspends broadcasting of the retried address requests for a predetermined time period.

Specifically, the address crossbar switch temporarily buffers the received address requests while monitoring them, and counts address requests of a predetermined type (for example, long-packet address requests). If the count of address requests of the type exceeds a threshold value (for example, if the count of long packets exceeds 100), the address crossbar switch suspends broadcasting retried address requests for a predetermined time period. When the broadcast-suspension period ends, the address crossbar switch restarts broadcasting the address requests in the order in which they were received.

For example, as shown in Fig. 2, an address request A transmitted from the system board SB#0 and broadcasted from the address crossbar switch is returned to be retried because the system board SB#1 has already transmitted an address request B specifying the same address. In such a situation, the system board SB#0 retries (retransmits) the address request A. The address crossbar switch receives the retried address request A, and, when a long-packet counter value exceeds a threshold value, suspends broadcasting the retried address request A for a predetermined time period.

Similarly, the address request B transmitted from the system board SB#1 and broadcasted from the address crossbar switch is returned to be retried because the system board SB#0 has already transmitted the address request A specifying the same address. In such a situation, the system board SB#1 retries (retransmits) the address request B. The address crossbar switch receives the retried address request B, and, if it is during a broadcast-suspension period, suspends broadcasting the retried address request B for a predetermined time period.

When the broadcast-suspension period ends, the address crossbar switch broadcasts the address request A, which was received first, as well as broadcasting a response to the address request A (for example, notification of an address in response to the address request). The system board SB#0 performs the next process such as data request based on the response received from the address crossbar switch.

Similarly, the address crossbar switch broadcasts the address request B, which was received after the address request A, as well as broadcasting a response to the address request B. The system board SB#1 performs the next process such as data request based on the response received from the address crossbar switch.

As described above, the address crossbar switch according to the embodiment adjusts the timing for transmitting, for example, retried address requests for the same address, thereby avoiding livelock and preventing system shutdown.

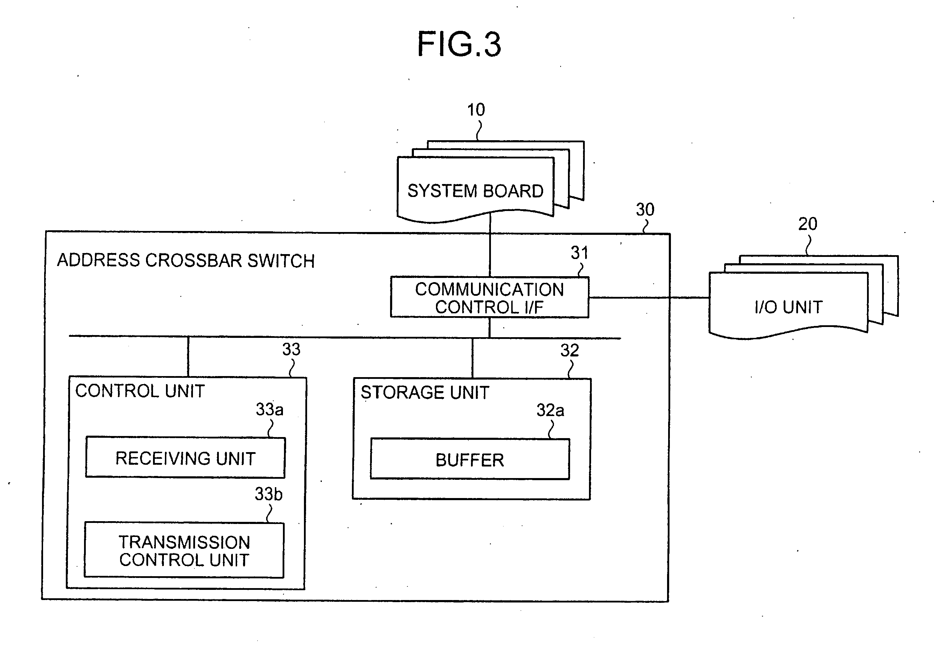

Fig. 3 is a block diagram of an address crossbar switch 30 according to the embodiment. The address crossbar switch 30 includes a communication control interface (I/F) 31, a storage unit 32, and a control unit 33. The communication control I/F 3.1 controls communication with a system board 10 and an I/O unit 20.

The storage unit 32 stores therein data and programs required for various processes performed by the control unit 33. Specifically related to the present invention, the storage unit 32 includes a buffer 32a. The buffer 32a temporarily stores therein information such as an address request received by a receiving unit 33a, described later.

The control unit 33 includes an internal memory that stores therein predetermined control programs, and programs specifying processing procedures and required data. The control unit 33 performs various processes according to the programs and the data. Specifically related to the present invention, the control unit 33 further includes the receiving unit 33a and a transmission control unit 33b.

The receiving unit 33a receives various information such as an address request from the system board 10 and the I/O unit 20 via the communication control I/F 31, and stores the information in the buffer 32a.

The transmission control unit 33b controls transmission (broadcast) of the information. Specifically, the transmission control unit 33b monitors address requests received by the receiving unit 33a, and counts address requests of a predetermined type (for example, long-packet address requests). If the count of address requests of the type exceeds a predetermined threshold value (for example, if the count of long packets exceeds 100), the transmission control unit 33b suspends broadcasting the address requests for a predetermined time period. When the broadcast-suspension period ends, the transmission control unit 33b restarts broadcasting the address request stored in the buffer 32a in the order in which they were received.

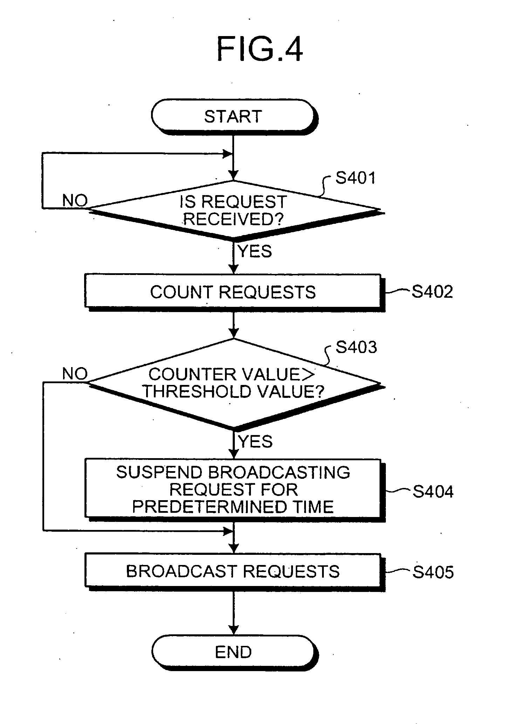

Fig. 4 is a flowchart of the operation of the address crossbar switch 30. When an address request is received by the receiving unit 33a (step S401), the transmission control unit 33b counts address requests of a predetermined type (for example, long-packet address requests) (step S402).

Then the transmission control unit 33b checks whether an address-request counter value exceeds a threshold value (step S403). If the counter value exceeds the threshold value (Yes at step S403), the transmission control unit 33b suspends broadcasting the address request for a predetermined time period (step S404). On the other hand, if the counter value does not exceed the threshold value (No at step S403), the transmission control unit 33b broadcasts the address request (step S405).

Each of the constituent elements of the address crossbar switch 30 shown in Fig. 3 is functionally conceptual, and need not necessarily be physically constituted as illustrated. In other words, specific form of distribution and integration of the address crossbar switch 30 is not limited two that shown in Fig. 3. For example, the receiving unit 33a can be integrated with the transmission control unit 33b. Namely, all or part of the constituent elements can be arbitrarily distributed or integrated either functionally or physically according to various loads, use state, or the like.

In addition, all or a part of processing functions of the address crossbar switch 30 (transmission control function, etc.) can be realized by a computer program. That is, a computer program can be stored in a predetermined memory or the like, and executed on a computer to realize the same function as the address crossbar switch 30. The process procedures, control procedures, and information including specific names mentioned in the above description and the drawings can be arbitrarily changed unless otherwise specified.

As set forth hereinabove, according to an embodiment of the present invention, address requests received from various devices (for example, CPU on the system board) in a computer system and from various external devices (for example, PCI card connected via an I/O unit) that are connected to the computer system are temporarily stored (buffered). The transmission of stored address requests is controlled to be suspended for a predetermined time period at a predetermined timing (for example, not fixed and variable or random timing). That is, the timing is adjusted to transmit, for example, retried address requests for the same address. Thus, it is possible to avoid livelock and prevent system shutdown.

Moreover, address requests received from the various devices are monitored to count address requests of a predetermined type (for example, long-packet address requests). The transmission of the address requests is suspended for a predetermined time period every time the counter value reaches a threshold value. The timing is adjusted to transmit the address requests according to the timing at which the counter value reaches the threshold value. Thus, livelock can be avoided without complicated circuitry.

## Claims

1. A transmission control device that arbitrates requests from devices in a computer system and devices externally connected to the computer system, and merges responses to the requests from the devices, the transmission control device comprising:
a storage unit (32) that is arranged to store therein a request; and
a transmission-suspension control unit (33) that is arranged to control transmission of stored request to be suspended for a predetermined time period **characterized in that**
the transmission-suspension control unit (33) is arranged to control the broadcast of said requests from devices in a computer system and devices externally connected to the computer system to all the devices, and the broadcast of the merged responses,
the storage unit (32) is arranged to store the request temporarily, and
the transmission-suspension control unit (33) further controls transmission of the stored request to be suspended at variable or random timing.

2. The transmission control device according to claim 1, further comprising a counter unit that monitors the requests from the devices, and counts requests of a predetermined type, wherein
the transmission-suspension control unit (33) is arranged to control the transmission of the stored request to be suspended for the predetermined time period every time a counter value obtained by the counter unit reaches a threshold value.

3. A transmission control method in which requests from devices in a computer system and devices externally connected to the computer system are arbitrated, and responses to the requests from the devices are merged, the transmission control method comprising:
storing a request; and
controlling transmission of stored request to be suspended for a predetermined time period, **characterized in that**
the control method includes
broadcasting, to all the devices, the requests from devices in a computer system and devices externally connected to the computer system, and
broadcasting, to all the devices, the merged responses,
the storing includes storing the request temporarily, and
the controlling includes controlling transmission of the stored request to be suspended at variable or random timing.

4. The transmission control method according to claim 3, further comprising counting requests of a predetermined type by monitoring the requests from the devices, wherein
the controlling includes controlling the transmission of the stored request to be suspended for the predetermined time period every time a counter value reaches a threshold value at the counting.

## Patentansprüche

1. Ubertragungssteuerungsvorriehtung, die Aufforderungen von Vorrichtungen in einem Computersystem und von extern mit dem Computersystem verbundenen Vorrichtungen arbitriert und Antworten auf die Aufforderüngen von den Vorrichtungen zusammenführt, welche Ubertragungssteuerungsvorrichtung umfasst:
eine Speichereinheit (32), die angeordnet ist, um in ihr eine Aufforderung zu speichern; und
eine Übertragungssuspendierungsteuerungscinheit (33), die angeordnet ist, um die Übertragung einer gespeicherten Aufforderung zu steuern, um für eine vorbestimmte Zeitperiode suspendiert zu werden, **dadurch gekennzeichnet, dass**
die Übertragungssuspendierungssteuerungseinheit (33) angeordnet ist, um das Rundsenden der Aufforderungen von Vorrichtungen in einem Computersystem und von extern mit dem Computersystem verbundenen vorrichtungen an alle Vorrichtungen sowie das Rundsenden der zusammengeführten Antworten zu steuern,
die Speichereinheit (32) angeordnet ist, um die Aufforderung temporär zu speichern, und
die Übertragungssuspendierungssteuerungseinheit (33) ferner die Übertragung der gespeicherten Aufforderung streuert, um zu einer variablen oder beliebigen Zeitlage suspendiert zu werden.

2. Übertragungssteuerungsvorrichtung nach Anspruch 1, ferner mit einer Zählereinheit, die die Aufforderungen von den Vorrichtungen überwacht und Aufforderungen eines vorbestimmten Typs zählt, bei der
die Übertragungaauapendierungssteuerungseinheit (33) angeordnet ist, um die Übertragung der gespeicherten Aufforderung zu steuern, um immer dann für die vorbestimmte Zeitperiode suspendiert zu werden, wenn ein Zählerwert, der durch die Zählereinheit erhalten wird, einen Schwellenwert erreicht.

3. Übertragungssteuerungsverfahren, bei dem Aufforderungen von Vorrichtungen in einem computersystem und von extern mit dem Computersystem verbundenen Vorrichtungen arbitriert werden und Antworten auf die Aufforderungen von den Vorrichtungen zusammengeführt werden, welches Übertragungssteuerungsverfahren umfasst:
Speichern einer Aufforderung; und
Steuern der Übertragung einer gespeicherten Aufforderung, um für eine vorbestimmte Zeitperiode suspendiert zu werden, **dadurch gekennzeichnet, dass**
das Steuerurigsverfahren enthält:
Rundsenden der Aufforderungen von Vorrichtungen in einem Computersystem und von extern mit dem Computersystem verbundenen Vorrichtungen an alle Vorrichtungen und
Rundsenden der zusammengeführten Antworten an alle Vorrichtungen,
das Speichern das temporäre Speichern der Aufforderung enthält und
das Steuern das Steuern der Übertragung der gespeicherten Aufforderung enthält, um zu einer variablen oder beliebigen Zeitlage suspendiert zu werden.

4. Übertragungssteuerungsverfahren nach Anspruch 3, ferner mit dem Zählen von Aufforderungen eines vorbestimmten Typs durch Überwachen der Aufforderungen von den Vorrichtungen, bei dem
das Steuern das Steuern der Übertragung der gespeicherten Aufforderung enthält, um immer dann für die vorbestimmte Zeitperiode suspendiert zu werden, wenn ein Zählerwert beim Zählen einen Schwellenwert erreicht.

## Revendications

1. Dispositif de commande de transmission qui arbitre entre des demandes provenant de dispositifs d'un système informatique et de dispositifs connectés de façon externe au système informatique, et qui fusionne des réponses aux demandes des dispositifs, le dispositif de commande de transmission comprenant :
une unité (32) de mémorisation qui est agencée pour y mémoriser une demande ; et
une unité (33) de commande de suspension de transmission qui est agencée pour ordonner que la transmission de la demande mémorisée soit suspendue pendant une période prédéterminée de temps,
**caractérisé :**
**en ce que** l'unité (33) de commande de suspension de transmission est agencée pour commander la diffusion, à tous les dispositifs, desdites demandes provenant de dispositifs du système informatique et de dispositifs connectés de manière externe au système informatique, et la diffusion des réponses fusionnées ;
**en ce que** l'unité (32) de mémorisation est agencée pour mémoriser temporairement la demande ; et
**en ce que** l'unité (33) de commande de suspension de transmission ordonne en outre que la transmission de la demande mémorisée soit suspendue à un moment variable ou aléatoire.

2. Dispositif de commande de transmission selon la revendication 1, comprenant en outre une unité de comptage qui surveille les demandes des dispositifs et qui compte les demandes d'un type prédéterminé,
dans lequel l'unité (33) de commande de suspension de transmission est agencée pour ordonner que la transmission de la demande mémorisée soit suspendue pendant la période prédéterminée de temps chaque fois qu'une valeur de compteur obtenue par l'unité de comptage atteint une valeur de seuil.

3. Procédé de commande de transmission dans lequel on arbitre entre des demandes provenant de dispositifs d'un système informatique et de dispositifs connectés de façon externe au système informatique, et dans lequel on fusionne des réponses aux demandes des dispositifs, le procédé de commande de transmission comprenant :
la mémorisation d'une demande ; et
l'ordre de suspendre la transmission de la demande mémorisée pendant une période prédéterminée de temps,
**caractérisé :**
**en ce que** le procédé inclut :
la diffusion, à tous les dispositifs, desdites demandes provenant de dispositifs du système informatique et de dispositifs connectés de manière externe au système informatique, et
la diffusion, à tous les dispositifs, des réponses fusionnées ;
**en ce que** la mémorisation inclut la mémorisation temporaire de la demande ; et
**en ce que** l'ordre inclut l'ordre de suspendre la transmission de la demande mémorisée à un moment variable ou aléatoire.

4. Procédé de commande de transmission selon la revendication 3, comprenant en outre le comptage des demandes d'un type prédéterminé en surveillant les demandes provenant des dispositifs,
dans lequel l'ordre inclut l'ordre de suspendre la transmission de la demande mémorisée pendant la période prédéterminée de temps chaque fois qu'une valeur de compteur atteint, au comptage, une valeur de seuil.
